# EUROPÄISCHE PATENTSCHRIFT

(11) **EP 1 415 089 B1**
(45) Veröffentlichungstag und Bekanntmachung des Hinweises auf die Patenterteilung: **21.03.2007**
(21) Anmeldenummer: 02759863.0
(22) Anmeldetag: 07.08.2002
(51) Int. Cl.: F03D 1/04

(54) **WINDKRAFTANLAGE ZUR ENERGIEGEWINNUNG**
WIND POWER PLANT FOR GENERATING ENERGY
INSTALLATION EOLIENNE SERVANT A PRODUIRE DE L'ENERGIE

(30) Priorität: 08.08.2001 AT 12382001; 17.10.2001 AT 16462001
(43) Veröffentlichungstag der Anmeldung: 06.05.2004
(73) Patentinhaber: Wieser, Gudrun, 4052 Ansfelden (AT)
(72) Erfinder: WIESER, Gerhard, A-4521 Schiedlberg (AT)
(74) Vertreter: Hübscher, Helmut
(86) Internationale Anmeldenummer: PCT/AT2002/000238
(87) Internationale Veröffentlichungsnummer: WO 2003/014562

(56) Entgegenhaltungen:
- EP-A- 0 045 264
- FR-A- 529 301
- FR-A- 2 488 337
- GB-A- 695 519

## Beschreibung

### Technisches Gebiet

Die Erfindung bezieht sich auf eine Windkraftanlage zur Energiegewinnung mit einem axial durchströmten, auf einer Welle drehbar gelagerten, mit Laufschaufeln versehenen Laufrad und mit einer die Luftströmung durch das Laufrad beschleunigenden Leiteinrichtung.

### Stand der Technik

Übliche Windkraftanlagen besitzen meist propellerartige Laufräder die zur Erzeugung von Energie in bzw. entgegen der Windrichtung ausgerichtet werden. Die bekannten Laufräder besitzen allerdings den Nachteil, daß ihre Wirtschaftlichkeit insbesondere bei kleinen Windgeschwindigkeiten und bei kleineren Durchmessern äußerst gering ist siehe EP-A-0 045 264. Um dies zu verbessern ist es bekannt (DE 33 23 200 A), die Luft dem Laufrad über eine trichterförmige Leiteinrichtung zuzuführen. Die Leiteinrichtung besitzt eine sich bis zum Turbinenrad verjüngende düsenartige Form, die den Luftstrom durch das Laufrad beschleunigen soll. Diese bekannte Windkraftanlage hat aber eine erhebliche Baugröße, insbesondere Baulänge, weshalb sie sich kaum in großem Umfang kommerziell nutzen läßt, wie insbesondere für den Privatbereich.

### Darstellung der Erfindung

Der Erfindung liegt somit die Aufgabe zugrunde, diese Mängel zu beseitigen, und eine Windkraftanlage der eingangs geschilderten Art bereitzustellen, die die zur Verfügung stehende Windenergie bei einer kompakten Baugröße möglichst vorteilhaft nutzt.

Die Erfindung löst diese Aufgabe dadurch, daß die Leiteinrichtung aus mehreren sich in Strömungsrichtung verjüngenden Strömungskanälen besteht, die auf dem Laufradkranz um eine Welle verteilt angeordnet sind, daß die Laufschaufeln jeweils einem Strömungskanal zugeordnet sind und daß das Laufrad einen es umschließenden Außenmantel aufweist.

Ein wesentlicher Anteil an der Wirkungsgradsteigerung der erfindungsgemäßen Windkraftanlage liegt darin, daß nahezu die gesamte projizierende Grundfläche des Laufrades die Luftströmung ausnutzt, wozu es die Vielzahl an kranzförmig um die Welle verteilt angeordneten Strömungskanälen für die Luftströmung aufweist, welchen einzelnen Strömungskanälen je Laufschaufeln zugeordnet sind. Jeder Strömungskanal besitzt somit seine eigene Leiteinrichtung, mit der er die Luftströmung den jeweiligen Schaufeln zuführt. Durch die besondere Ausgestaltungsform der einzelnen Strömungskanäle und das Vorsehen des das Laufrad umschließenden Außenmantels wird der Staudruck vor dem Laufrad zusätzlich erhöht, wodurch die durch das Laufrad strömende Luft zusätzlich beschleunigt wird. Die Laufschaufeln können beispielsweise in den Strömungskanälen bis zum Strömungskanalende oder über das Strömungskanalende hinaus angeordnet vorgesehen sein. Soll eine konstruktiv einfache Konstruktion geschaffen werden, empfiehlt es sich die Laufschaufeln dem jeweiligen Strömungskanal nachzuordnen.

Besonders vorteilhafte Verhältnisse ergeben sich für die Windkraftanlage, wenn sich die Strömungskanäle im Anschluß an ihre Verjüngung wieder erweitern, wobei die einzelnen Strömungsquerschnitte dann düsenförmig ausgebildet sind und sich im Bereich der Laufschaufeln eine maximale Strömungsgeschwindigkeit einstellt. Um die erfindungsgemäße Windkraftanlage über einen großen Geschwindigkeitsbereich einer Luftströmung bestmöglich einsetzen zu können, sind die Laufschaufeln verstellbar ausgebildet, so daß der Anstellwinkel der Laufschaufeln an die jeweils vorherrschende Luftströmung angepaßt werden kann.

Nach einer vorteilhaften Weiterbildung der Erfindung sind in den Strömungskanälen vor den Laufschaufeln Leitwände angeordnet, welche die Luftströmung den Laufschaufeln zuleiten. Diese Leitwände können beispielsweise schräg gestellte Leitschienen sein, welche die Luftströmung zur Strömungskanalmitte hin umleiten.

Um beispielsweise bei böigen Windverhältnissen eine möglichst konstante Drehzahl des Laufrades gewährleisten zu können, kann dem Laufrad eine koaxial zum Laufrad gelagerte Schwungscheibe zugehören, die mittels einer Kupplung lösbar mit dem Laufrad verbunden ist. So wird die Schwungscheibe während des Anfahrvorganges beispielsweise vom Laufrad gelöst um das Trägheitsmoment des Laufrades zu mindern und um den Anlaufvorgang insbesondere bei geringen Windstärken zu beschleunigen. Hat das Laufrad dann seine gewünschte Betriebsdrehzahl erreicht, kann das Schwungrad langsam an das Laufrad gekuppelt werden und somit schließlich als Energiespeicher zum Ausgleich von Drehzahlschwankungen dienen. Ein besonders hohes Trägheitsmoment und somit Ausgleichsvermögen für Drehzahlschwankungen und einfache Konstruktionsverhältnisse ergeben sich, wenn die Schwungscheibe im Außenmantel des Laufrades angeordnet ist.

Ist eine mobile Nutzung der erfindungsgemäßen Windkraftanlage gewünscht, wird sie auf ein Trägerfahrzeug aufgebaut. Dieses Trägerfahrzeug kann beispielsweise ein Baggerfahrzeug sein, auf dessen Baggerarm die Windkraftanlage montiert ist. Die Windnachführung wird in diesem Fall über den Drehkranz des Kettenfahrzeuges geregelt. Das Kettenfahrzeug kann im Gelände selbst schwer zugängliche Standorte leicht und ohne zusätzliche Hilfsmittel anfahren.

Soll der Wirkungsgrad der erfindungsgemäßen Windkraftanlage noch weiter gesteigert bzw. die zur Verfügung stehende Windenergie noch besser genutzt werden, wird vorgeschlagen, dem Laufrad ein auf einer Zusatzwelle sitzendes, axial durchströmtes Hilfslaufrad nachzuordnen. Das Hilfslaufrad kann beispielsweise mit einem herkömmlichen Rotorblattsystem versehen sein, welche Rotorblätter zur Anpassung an die jeweiligen Gegebenheiten vorzugsweise verstellbar ausgebildet sind.

Die erfindungsgemäße Windkraftanlage ist entweder mit gegen den Wind ausgerichteten horizontaler Drehachse auf einem Masten od. dgl. angeordnet, oder das Laufrad ist mit vertikaler Achse in einem Turm gelagert, der einen koaxial zum Laufrad verstellbaren Turmkopf mit einem die horizontale Windströmung gegen das Laufrad umlenkenden Rohrknie aufweist, womit auch das Druckgefälle zwischen Turmober- und -unterseite, also zwischen Einlaß und Auslaß zur Energiegewinnung genutzt werden kann. Soll die Windgeschwindigkeit durch das Laufrad zusätzlich erhöht werden, ist es vorteilhaft, wenn sich der Strömungsanschluß des Rohrknies an das Laufrad in Strömungsrichtung verengt.

Um bedarfsweise entweder das Laufrad oder das Hilfslaufrad im Betrieb als Leiteinrichtung für das jeweils andere Rad einsetzen zu können, ist dem Laufrad und/oder dem Hilfslaufrad eine Bremseinrichtung zugeordnet, mit der entweder das eine oder das andere Rad bis zum Stillstand abgebremst werden kann.

### Kurze Beschreibung der Zeichnung

Die Erfindung ist in der Zeichnung anhand eines Ausführungsbeispieles schematisch dargestellt. Es zeigen:
- Fig. 1: eine erfindungsgemäße Windkraftanlage in Vorderansicht,
- Fig. 2: die Windkraftanlage aus Fig. 2 in teilgeschnittener Seitenansicht,
- Fig. 3: die Windkraftanlage aus den Fig. 1 und 2 in Hinteransicht mit dem Laufrad nachgeordnetem Hilfslaufrad,
- Fig. 4 und 5: eine Ausgestaltungsvariante der Windkraftanlage aus den Fig. 2 und 3 in Vorder- und Seitenansicht,
- Fig. 6: ein Geschwindigkeits- und Druckverteilungsschema für einen Strömungskanal,
- Fig. 7: in einem Strömungskanal angeordnete Leitwände,
- Fig. 8: ein Ausführungsbeispiel für Laufschaufeln,

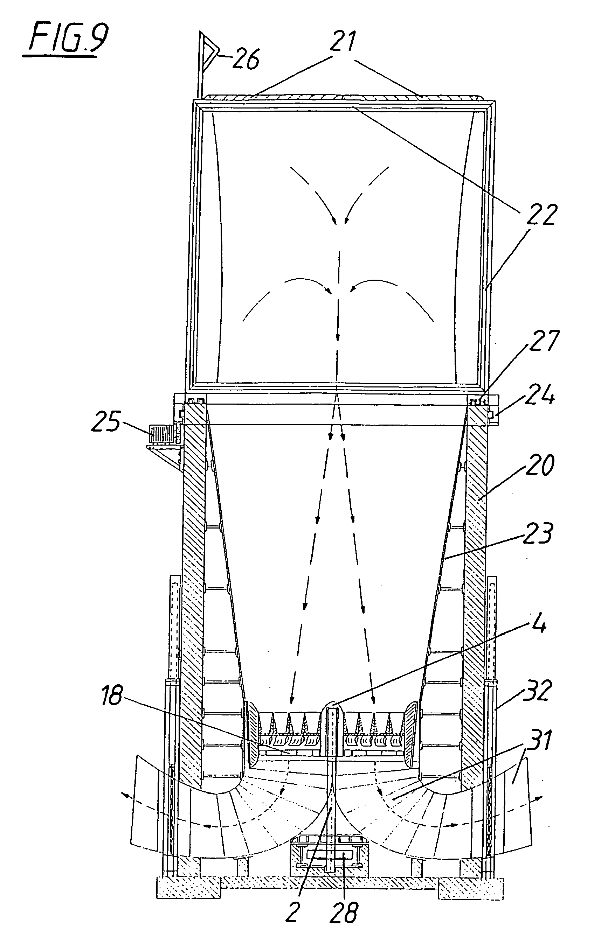

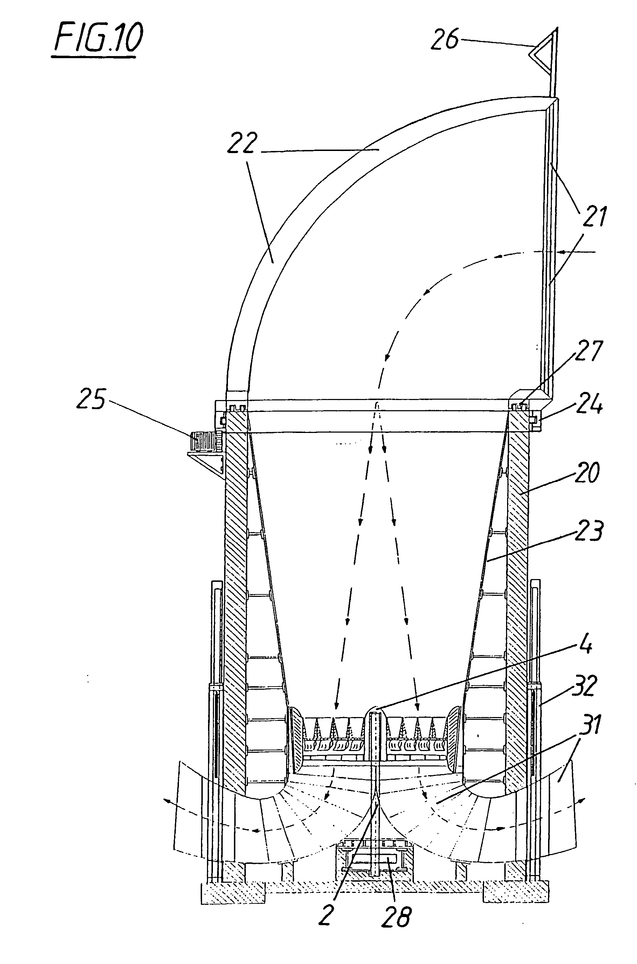

- Fig. 9 und 10: eine in einem Turm angeordnete erfindungsgemäße Windkraftanlage in geschnittener Vorderansicht und Seitenansicht,

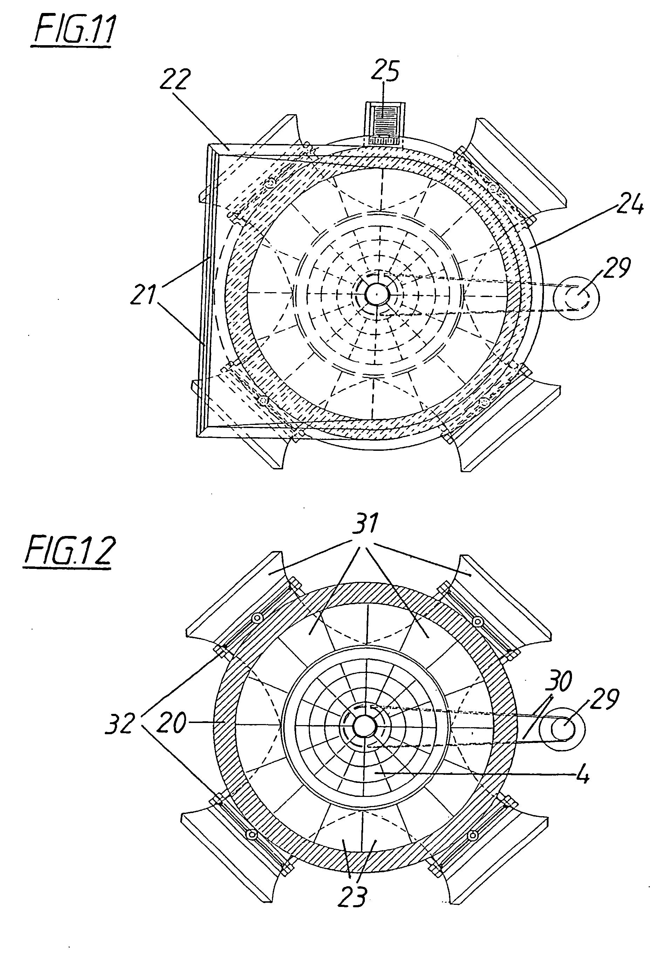

- Fig. 11 und 12: die Windkraftanlage aus der Fig. 9 und 10 in teilgeschnittener Draufsicht und
- Fig. 13: eine Verbauungsvariante der Windkraftanlage aus den Fig. 9 bis 12 in teilgeschnittener Seitenansicht.

### Weg zur Ausführung der Erfindung

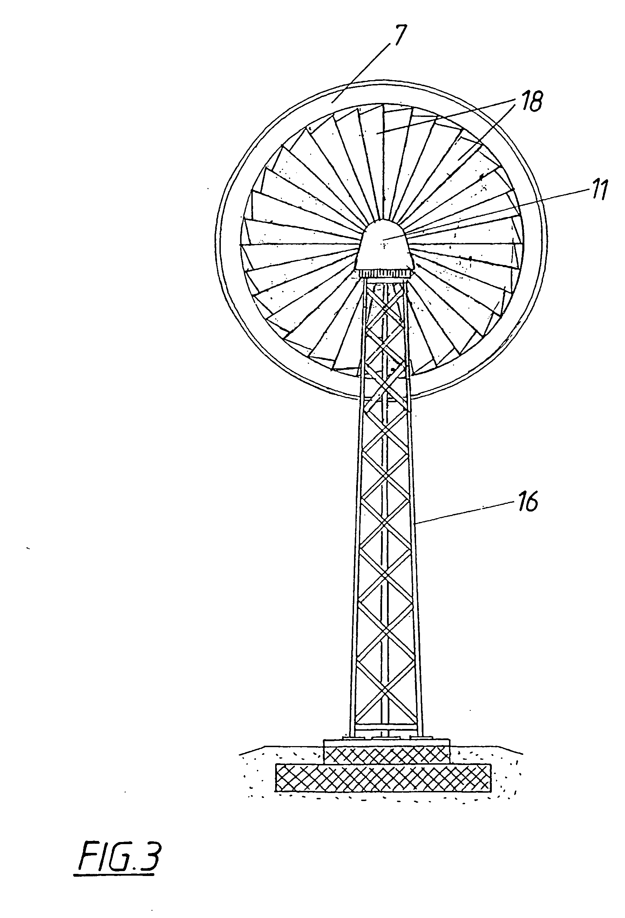

Eine Windkraftanlage 1 zur Energiegewinnung besteht im wesentlichen aus einem axial durchströmten, auf einer Welle 2 befestigten und mit Laufschaufeln 3 versehenen Laufrad 4 und aus einer die Luftströmung durch das Laufrad 4 beschleunigenden Leiteinrichtung 5. Die Leiteinrichtung 5 setzt sich aus mehreren sich in Strömungsrichtung verjüngenden Strömungskanälen 6 zusammen. Diese Strömungskanäle 6 sind mit ihren Leiteinrichtungen 5 auf dem Laufrad 4 kranzförmig um die Welle 2 verteilt angeordnet, um die Luftströmung über den gesamten angeströmten Querschnitt des Laufrades 4 nutzen zu können. Die Laufschaufeln 3 sind jeweils einem Strömungskanal 6 nachgeordnet und das Laufrad 4 weist einen es umschließenden Außenmantel 7 auf. Dieser Außenmantel besitzt eine Ringdüsenform, wodurch der Staudruck vor dem Laufrad 4 erhöht werden soll. Ebenso erhöhen die kranzförmigen Leiteinrichtungen 5 den Staudruck. Dem Laufrad 4 ist ein auf einer nicht näher dargestellten Zusatzwelle sitzendes, ebenso wie das Laufrad axial durchströmtes Hilfslaufrad 18, zur besseren Ausnutzung der Windenergie nachgeordnet (Fig. 3). Das Hilfslaufrad 18 treibt ebenfalls einen Generator an.

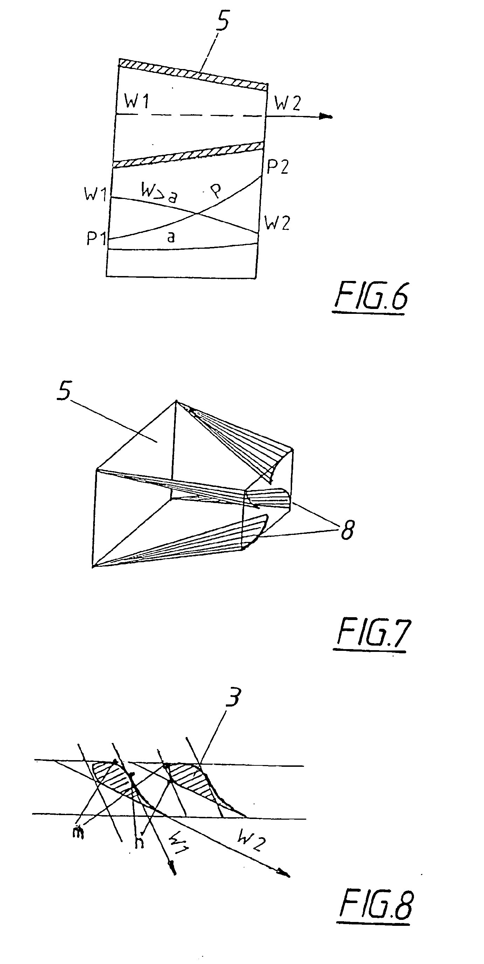

Die Strömungskanäle 6 erweitern sich im Anschluß an ihre Verjüngung wieder. Zur Steigerung des Nutzungsgrades der Windkraftanlage 1 können die Laufschaufeln ein Tragflächenprofil besitzen. Vorteilhafterweise bilden die Laufschaufeln 3 zwischen sich ebenfalls düsenförmige Strömungskanäle aus, wobei sich die Strömungskanäle zwischen den Punkten m und n (Fig. 8) verjüngen und anschließend wieder erweitern. Die Laufschaufeln 3 sind zur Anpassung an die vorherrschende Windgeschwindigkeit verstellbar ausgebildet. Ebenso können in einzelnen Strömungskanälen 6 vor den Laufschaufeln 3 Leitwände 8 angeordnet sein. Diese Leitwände 8 sollen dem Luftstrom innerhalb der Strömungskanäle 6 eine gegen die Laufschaufeln gerichtete Strömung aufzwingen.

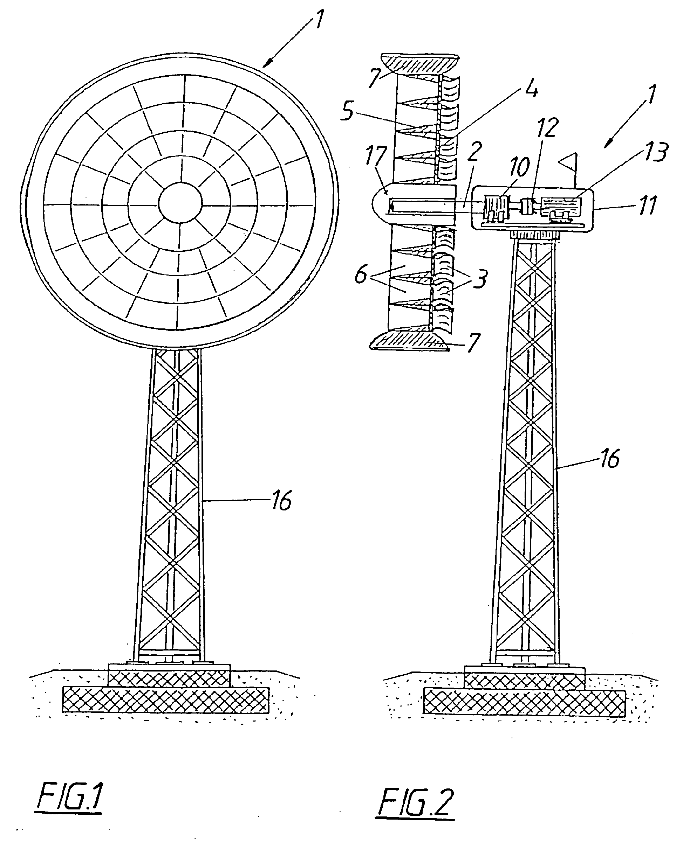

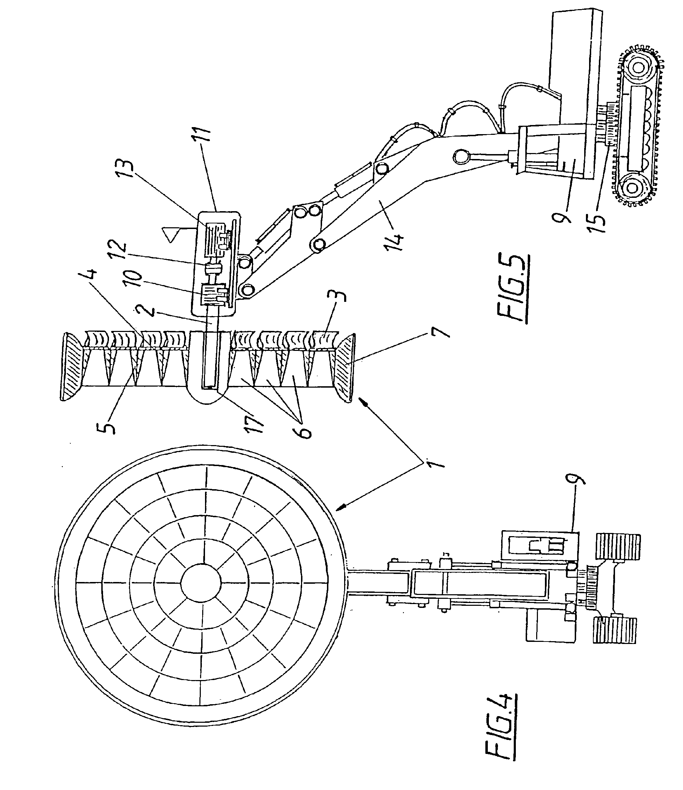

Die erfindungsgemäße Windkraftanlage kann gemäß den Fig. 4 und 5 auf einem mobilen Trägerfahrzeug 9 angeordnet sein, um die mobile Nutzung der Windkraftanlage 1 sicherzustellen. Das Laufrad 4 ist auf der Welle 2 befestigt, die in einem Gehäuse 11 drehbar gelagert und über ein Getriebe 10 und eine Kupplung 12 an einen Generator 13 angeschlossen ist, wodurch die Windenergie in elektrische Energie umsetzt wird. Die Windkraftanlage 1 ist auf einem Ausleger 14 des Trägerfahrzeuges 9 montiert. Die Windnachführung der Windkraftanlage 1 erfolgt über einen Drehkranz 15 des Trägerfahrzeuges, beispielsweise mittels eines in den Drehkranz 15 eingreifenden Elektromotors. Nach den Fig. 2 und 3 ist die erfindungsgemäße Windkraftanlage 1 auf einem Gittermast 16 montiert. Das Laufrad 3 besitzt koaxial zur Welle 2 einen mittleren Verdrängungskörper 17, der gleichzeitig eine Nabe zur Aufnahme des Laufrades 4 ausbildet und die Luftströmung aus dem inneren Radbereich, in dem die Nutzwirkung aufgrund des geringen Abstandes zur Drehachse sehr klein wäre, den weiter außen liegenden Strömungskanälen zuleitet, wodurch der Staudruck vor dem Laufrad 4 zusätzlich erhöht wird.

Nach der Ausgestaltungsvariante einer erfindungsgemäßen Windkraftanlage 1, ist das Laufrad 4 mit vertikaler Achse in einem Turm 20 gelagert, der einen koaxial zum Laufrad 4 verstellbaren Turmkopf 21 mit einem die horizontale Windströmung gegen das Laufrad 4 umlenkenden Rohrknie 22 aufweist. Der Strömungsanschluß 23 des Rohrknies 22 an das Laufrad 4 verengt sich in Strömungsrichtung der durch das Rohrknie 22 auf das Laufrad 4 zuströmenden Luft. Der Luftstrom wird dem Laufrad 4 über den auf einem Drehkranz 24 gelagerten Turmkopf 21 zugeführt. Die Windnachführung erfolgt über einen auf den Drehkranz 24 wirkenden Drehkranzmotor 25, der in Abhängigkeit der jeweils vorherrschenden Windrichtung von einem Windrichtungssensor 26 angesteuert wird. Der Turmkopf 21 stützt sich über ein Lager 27 am Turm ab.

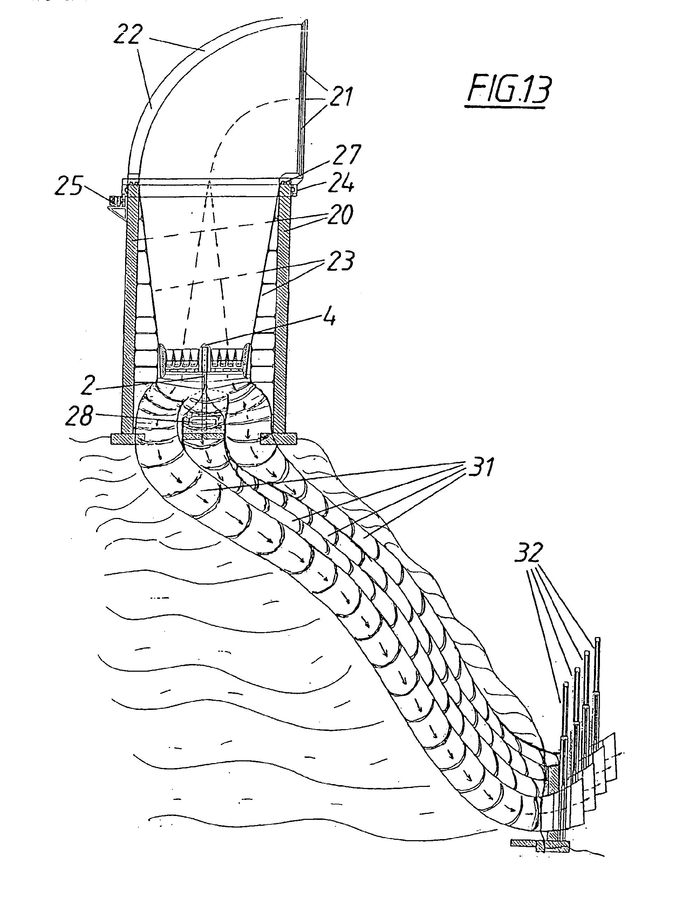

Das Laufrad 4 ist einerseits mit einer in Turmbodennähe angeordneten Schwungscheibe 28 und anderseits mit einem Generator 29 antriebsverbunden. Gemäß dem Ausführungsbeispiel wird der Generator 29 mittels eines Flachriemens 30 angetrieben der an der Schwungscheibe 28 angreift. Die in den Turm 20 einströmende Luft verläßt den Turm 20 in Turmbodennähe über Rohre 31. Am Ende der Rohre 31 sind regelbare Ventile 32 zur Regelung des die Windkraftanlage 1 durchströmenden Luftstromes vorgesehen. Im Falle, daß das Gelände auf dem die erfindungsgemäße Windkraftanlage versetzt ist, auf wenigstens einer Seite des Turmes 20 abfällt, können die Rohre 31 vom Turbinenboden das Gelände hinab verlegt werden (Fig. 13), um eventuell vorherrschende Druckdifferenzen zwischen Lufteintritt und -austritt ebenfalls zur Energiegewinnung nutzen zu können.

## Patentansprüche

1. Windkraftanlage zur Energiegewinnung mit einem axial durchströmten, auf einer Welle drehbar gelagerten, mit Laufschaufeln versehenen Laufrad und mit einer die Luftströmung durch das Laufrad beschleunigenden Leiteinrichtung, **dadurch gekennzeichnet, daß** die Leiteinrichtung (5) aus mehreren sich in Strömungsrichtung verjüngenden Strömungskanälen (6) besteht, die auf dem Laufrad (4) kranzförmig um die Welle (2) verteilt angeordnet sind, daß die Laufschaufeln (3) jeweils einem Strömungskanal (6) zugeordnet sind und daß das Laufrad (4) einen es umschließenden Außenmantel (7) aufweist.

2. Windkraftanlage nach Anspruch 1, **dadurch gekennzeichnet, daß** die Laufschaufeln (3) jeweils einem Strömungskanal (6) nachgeordnet sind.

3. Windkraftanlage nach Anspruch 1 oder 2, **dadurch gekennzeichnet, daß** sich die Strömungskanäle (6) im Anschluß an ihre Verjüngung wieder erweitern.

4. Windkraftanlage nach einem der Ansprüche 1 bis 3, **dadurch gekennzeichnet, daß** die Laufschaufeln (3) verstellbar ausgebildet sind.

5. Windkraftanlage nach einem der Ansprüche 1 bis 4, **dadurch gekennzeichnet, daß** in den Strömungskanälen (6) vor den Laufschaufeln (3) Leitwände (8) angeordnet sind.

6. Windkraftanlage nach einem der Ansprüche 1 bis 5, **dadurch gekennzeichnet, daß** dem Laufrad (4) eine koaxial zum Laufrad (4) gelagerte Schwungscheibe (28) zugehört, die mittels einer Kupplung lösbar mit dem Laufrad (4) verbunden ist.

7. Windkraftanlage nach Anspruch 6, **dadurch gekennzeichnet, daß** die Schwungscheibe (28) im Außenmantel (7) angeordnet ist.

8. Windkraftanlage nach einem der Ansprüche 1 bis 7, **gekennzeichnet durch** Ihre mobile Nutzung auf einem Trägerfahrzeug (9).

9. Windkraftanlage nach einem der Ansprüche 1 bis 8, **dadurch gekennzeichnet, daß** dem Laufrad (4) ein auf einer Zusatzwelle sitzendes axial durchströmtes Hilfslaufrad (18) nachgeordnet ist.

10. Windkraftanlage nach Anspruch 9, **dadurch gekennzeichnet, daß** das Hilfslaufrad (18) verstellbare Rotorblätter aufweist.

11. Windkraftanlage nach einem der Ansprüche 1 bis 10, **dadurch gekennzeichnet, daß** das Laufrad (4) mit vertikaler Achse in einem Turm (20) gelagert ist, der einen koaxial zum Laufrad (4) verstellbaren Turmkopf (21) mit einem die horizontale Windströmung gegen das Laufrad (4) umlenkenden Rohrknie (22) aufweist.

12. Windkraftanlage nach Anspruch 11, **dadurch gekennzeichnet, daß** sich der Strömungsanschluß (23) des Rohrknies (22) an das Laufrad (4) in Strömungsrichtung verengt.

13. Windkraftanlage nach einem der Ansprüche 9 bis 12, **dadurch gekennzeichnet, daß** dem Laufrad (4) und/oder dem Hilfslaufrad (18) eine Bremseinrichtung zugeordnet ist.

## Claims

1. Wind power unit for energy extraction, having an impeller provided with blades which is mounted so as to be rotatable on a shaft and through which there is an axial flow, and having a guiding device accelerating the air flow through the impeller, **characterised in that** the guiding device (5) consists of a plurality of flow passages (6) tapering in the flow direction which are arranged on the impeller distributed in a ring around the shaft (2), **in that** the impeller blades (3) are each assigned to a flow passage (6) and **in that** the impeller (4) comprises an outer shell (7) enclosing it.

2. Wind power unit according to claim 1, **characterised in that** the impeller blades (3) are each arranged after a flow passage (6).

3. Wind power unit according to claim 1 or 2, **characterised in that** the flow passages (6) widen again after their tapering.

4. Wind power unit according to one of the claims 1 to 3, **characterised in that** the impeller blades (3) are formed so as to be adjustable.

5. Wind power unit according to one of the claims 1 to 4, **characterised in that** guiding walls (8) are arranged in the flow passages (6) before the impeller blades (3).

6. wind power unit according to one of the claims 1 to 5, **characterised in that** a flywheel (28) mounted coaxially with the impeller (4) belongs to the impeller (4), said flywheel (28) being connected in a releasable way to the impeller (4) by means of a coupling.

7. Wind power unit according to claim 6, **characterised in that** the flywheel (28) is arranged in the outer shell (7).

8. Wind power unit according to one of the claims 1 to 7, **characterised by** its mobile use on a carrying vehicle (9).

9. Wind power unit according to one of the claims 1 to 8, **characterised in that** an auxiliary impeller (18) located on an additional shaft and having an axial flow through it is arranged after the impeller (4).

10. Wind power unit according to claim 9, **characterised in that** the auxiliary impeller (18) comprises adjustable rotor blades.

11. Wind power unit according to one of the claims 1 to 10, **characterised in that** the impeller (4) is mounted with its vertical axis in a tower (20) which comprises a tower head (21) which can be adjusted coaxially with the impeller (4) with a pipe elbow (22) deflecting the horizontal wind flow against the impeller (4).

12. Wind power unit according to claim 11, **characterised in that** the flow connection (23) of the pipe elbow (22) narrows in the flow direction onto the impeller (4).

13. wind power unit according to one of the claims 9 to 12, **characterised in that** a braking unit is assigned to the impeller (4) and / or to the auxiliary impeller (18).

## Revendications

1. Installation éolienne servant à produire de l'énergie, avec une roue mobile, munie d'aubes mobiles, montée à rotation sur un arbre et traversée axialement par un écoulement et avec un dispositif directeur, ayant comme effet d'accélérer l'écoulement d'air passant par la roue mobile, **caractérisée en ce que** le dispositif directeur (5) est composé d'une pluralité de canaux d'écoulement (6), allant en s'effilant en évoluant dans la direction d'écoulement et répartis autour de l'arbre (2) en forme de couronne sur la roue mobile (4), **en ce que** les aubes mobiles (3) sont chacune associées à un canal d'écoulement (6), et **en ce que** la roue mobile (4) présente une enveloppe extérieure (7) l'entourant.

2. Installation éolienne selon la revendication 1, **caractérisée en ce que** les aubes mobiles (3) sont chacune disposées en avant d'un canal d'écoulement (6).

3. Installation éolienne selon la revendication 1 ou 2, **caractérisée en ce que** les canaux d'écoulement (6) vont en s'élargissant de nouveau à la suite de leur effilement.

4. Installation éolienne selon l'une des revendications 1 à 3, **caractérisée en ce que** les aubes mobiles (3) sont réglables.

5. Installation éolienne selon l'une des revendications 1 à 4, **caractérisée en ce que** des parois directrices (8) sont disposées devant les aubes mobiles (3) dans les canaux d'écoulement (6).

6. Installation éolienne selon l'une des revendications 1 à 5, **caractérisée en ce qu'**un volant d'inertie discoïde (28), relié de façon désolidarisable à la roue mobile (4) au moyen d'un accouplement et monté en palier coaxialement par rapport à la roue mobile (4), appartient à cette roue mobile (4).

7. Installation éolienne selon la revendication 6, **caractérisée en ce que** le volant d'inertie discoïde (28) est disposé dans l'enveloppe extérieure (7).

8. Installation éolienne selon l'une des revendications 1 à 7, **caractérisée par** son utilisation mobile sur un véhicule porteur (9).

9. Installation éolienne selon l'une des revendications 1 à 8, **caractérisée en ce qu'**une roue mobile auxiliaire (18), traversée axialement par un écoulement et montée sur un arbre additionnel, est disposée en aval de la roue mobile (4).

10. Installation éolienne selon la revendication 9, **caractérisée en ce que** la roue mobile auxiliaire (18) présente des pales de rotor réglables.

11. Installation éolienne selon l'une des revendications 1 à 10, **caractérisée en ce que** la roue mobile (4) est montée avec un axe vertical dans une tour (20), présentant une tête de tour (21) réglable coaxialement par rapport à la roue mobile (4), munie d'un coude tubulaire (22) déviant l'écoulement horizontal du vent vers la roue mobile (4).

12. Installation éolienne selon la revendication 11, **caractérisée en ce que** le raccordement d'écoulement (23) du coude tubulaire (22) à la roue mobile (4) va en rétrécissant en évoluant dans la direction de l'écoulement.

13. Installation éolienne selon l'une des revendications 9 à 12, **caractérisée en ce qu'**un dispositif de freinage est associé à la roue mobile (4) et/ou à la roue mobile auxiliaire (18).
